# EUROPEAN PATENT SPECIFICATION

(11) **EP 4 708 663 B1**
(45) Date of publication and mention of the grant of the patent: **09.12.2026**
(21) Application number: 25150093.0
(22) Date of filing: 02.01.2025
(51) Int. Cl.: H02P 1/30, H02P 23/14, H02P 27/04

(54) **METHOD FOR CONTROLLING INDUCTION MOTOR, DEVICE, EQUIPMENT, AND STORAGE MEDIUM**
VERFAHREN ZUR STEUERUNG EINES INDUKTIONSMOTORS, VORRICHTUNG, AUSRÜSTUNG UND SPEICHERMEDIUM
PROCÉDÉ DE COMMANDE DE MOTEUR À INDUCTION, DISPOSITIF, ÉQUIPEMENT ET SUPPORT D'INFORMATIONS

(30) Priority: 04.09.2024 CN 202411235454
(43) Date of publication of application: 11.03.2026
(73) Proprietor: Fortior Technology (Shanghai) Co., Ltd., Shanghai 201800 (CN)
(72) Inventor: BI, Chao, Shanghai, 201800 (CN); MA, Xiaojun, Shanghai, 201800 (CN); BI, Lei, Shanghai, 201800 (CN)
(74) Representative: Monteiro Alves, Inês

(56) References cited:
- CN-A- 108 111 091
- CN-A- 117 526 769
- US-A1- 2003 205 983
- HAIXU CHEN ET AL: "Optimal starting frequency of three-phase induction motor", IET ELECTRIC POWER APPLICATIONS, IET, UK, vol. 16, no. 3, 16 November 2021 (2021-11-16), pages 362 - 369, XP006115031, ISSN: 1751-8660, DOI: 10.1049/ELP2.12159
- POPESCU MIHAELA ET AL: "Optimal Control Method of an Asynchronous Traction Motor", 2019 11TH INTERNATIONAL SYMPOSIUM ON ADVANCED TOPICS IN ELECTRICAL ENGINEERING (ATEE), IEEE, 28 March 2019 (2019-03-28), pages 1 - 6, XP033553348, DOI: 10.1109/ATEE.2019.8724969
- MANZ L ET AL: "Starting high inertia loads on adjustable speed drives", CEMENT INDUSTRY TECHNICAL CONFERENCE. 1997. XXXIX CONFERENCE RECORD., 1997 IEEE/PCA HERSHEY, PA, USA 20-24 APRIL 1997, NEW YORK, NY, USA,IEEE, US, 20 April 1997 (1997-04-20), pages 81 - 87, XP010230172, ISBN: 978-0-7803-3962-0, DOI: 10.1109/CITCON.1997.599175

## Description

### TECHNICAL FIELD

The present application relates to the technical field of induction motor control, in particular to a method for controlling an induction motor, a device, an equipment and a storage medium.

### BACKGROUND

Induction motors are widely used in many fields due to their simple structure, good reliability, stable performance, and simple control program of drive controller.

Induction motors usually operate at the loads significantly lower than their rated loads to reduce the risk of overload in their operation. In order to improve the operating efficiency of induction motors when running at light loads, most existing motor control methods use electronic inverters to perform variable frequency speed control on induction motors. In order to ensure the safety of the controller, it is necessary to increase the safe current capacity of the power semiconductors in the electronic inverter to increase the current redundancy of the power semiconductors to enhance the overload capacity and starting capacity of the induction motor, but this also increases the cost of the inverter.

Haixu Chen et al discloses the preamble of independent claim 1, in particular a method to maximize the starting torque of a three-phase induction motor within the current limits of its driver. By evaluating the frequency characteristics of the motor, a specific, optimal frequency point that yields the maximum possible torque per unit of drive current is derived.

CN108111091A discloses a method, device and storage medium for reducing the total loss of an asynchronous motor.

Popescu, Mihaela et al discloses a real-time analytical method for calculating reference inputs, in particular rotor flux and electromagnetic torque, within the vector control system of an induction motor used in electric traction drives.

US2003205983A1 discloses a method for controlling an induction motor using an equivalent circuit model.

Manz L et al disclose an algorithm for estimating variable parameters, and analyze the energy performance under constant rotor-frequency control.

CN117526769 A discloses a starting method for a three-phase motor.

Therefore, how to improve the operating efficiency and starting capacity of induction motors without increasing the cost of inverter power semiconductors has always been a key technical problem that needs to be broken through in the application field of induction motors.

### SUMMARY

The main purpose of the present application is to provide a method for controlling an induction motor, a device, an equipment and a storage medium, aiming to improve the operating efficiency and optimize the starting capability of the induction motor without increasing the cost of the inverter.

In order to achieve the above purpose, the present invention is defined in the independent claims with preferred embodiments disclosed in the dependent claims.

The present application provides the method for controlling the induction motor to improve the operating efficiency and optimize the starting capability of the induction motor. Specifically, the present application aims to improve the characteristics of insufficient starting torque when the induction motor is running. The motor driver provided in the present application can accurately obtain the initial equivalent parameters of the equivalent circuit of the induction motor when the motor speed is zero, and the optimal starting frequency is obtained based on the initial equivalent parameters. The starting voltage determined by combining the preset safe starting current achieves a smooth and efficient start of the induction motor, thereby significantly improving the starting ability of the induction motor; next, after starting the induction motor into the starting operation phase in accordance with the optimal starting frequency and starting voltage, the starting speed of the induction motor is detected in real time. When the motor starting speed accelerates to be consistent with the preset steady operation speed, it indicates that the induction motor has successfully transitioned from the starting phase to the steady operation phase; the voltage and current values of the induction motor in the steady operation phase are then obtained. Based on the voltage and current values, the parameters of the stator branch, rotor branch and excitation branch are efficiently identified, and based on the identified parameters, the optimal operation frequency of the induction motor can be accurately obtained; next, the induction motor is driven to operate in the steady operation phase according to the optimal operation frequency, thereby ensuring that the induction motor maintains high performance during the steady-state operation; then, the actual motor speed is detected in real time when the induction motor is running in the steady operation phase, and the driving voltage is adjusted according to the actual motor speed to dynamically maintain the steady-state operation of the induction motor, thereby achieving a significant improvement in the operating efficiency of the induction motor and a comprehensive optimization of startup capabilities without increasing the cost of the inverter.

### BRIEF DESCRIPTION OF THE DRAWINGS

The drawings herein are incorporated into the specification and constitute a part of the specification, showing embodiments consistent with the present application, and are configured together with the specification to explain the principles of the present application.

In order to more clearly illustrate the technical solutions in the embodiments of the present application or the related art, the drawings required for use in the embodiments or the related art will be briefly introduced below. Obviously, for those skilled in the art, other drawings can also be obtained based on these drawings without creative labor.
FIG. 1 is a flow chart of a method for controlling an induction motor according to a first embodiment of the present application.
FIG. 2 is a schematic diagram of an equivalent circuit of the induction motor according to an embodiment of the present application.
FIG. 3 is a multi-phase start-up control flow chart according to an embodiment of the present application.
FIG. 4 is a control process block diagram according to an embodiment of the present application.
FIG. 5 is a structural schematic diagram of a device for controlling the induction motor according to an embodiment of the present application.
FIG. 6 is a structural schematic diagram of an equipment for controlling the induction motor according to an embodiment of the present application.

The realization of the purpose, functional features and advantages of the present application will be further explained in conjunction with the embodiments and with reference to the drawings.

### DETAILED DESCRIPTION OF THE EMBODIMENTS

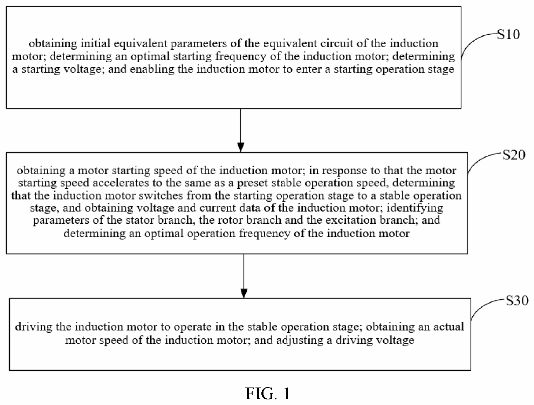

The embodiment of the present application provides the method for controlling the induction motor, as shown in FIG. 1, which is a flow chart of the first embodiment of the method for controlling the induction motor of the present application.

Here, the exemplary embodiment will be described in detail, and its examples are shown in the accompanying drawings. When the following description refers to the drawings, unless otherwise indicated, the same numbers in different drawings represent the same or similar elements. The implementation methods described in the following exemplary embodiments do not represent all implementation methods consistent with the present application.

Induction motors are used in many fields due to their simple structure, good reliability, stable performance, and simple control procedures of the drive controller. However, the starting torque of such motors is low. In order to reduce the operating risk, many motors are operated at light loads in a state lower than their rated loads in daily operation. The efficiency of light load operation of induction motors is relatively low.

When the induction motor needs to be speed-controlled, an electronic inverter is usually configured to drive the induction motor by frequency conversion. In order to solve the problem of insufficient starting torque of the induction motor, the current redundancy of the inverter must be large to increase the starting torque of the motor by increasing the starting current. This requires increasing the safe current capacity of the power semiconductor of the inverter, which also increases the cost of the inverter.

To solve the above defects, the present application provides the method for controlling the induction motor, the device, the equipment and the storage medium.

The method for controlling the induction motor provided in the present application can be applied to a motor driver electrically connected to the induction motor, and can also be executed by a device for controlling the induction motor that drives and controls the induction motor. Specifically, the control center in the terminal device executes the following method for controlling the induction motor. In addition, the equivalent circuit of the induction motor includes a stator branch, a rotor branch and an excitation branch; that is, the equivalent circuit provided in the present application is a T-type equivalent circuit composed of a stator branch, a rotor branch and an excitation branch. The execution subject of the present application will not be repeated in the following embodiments.

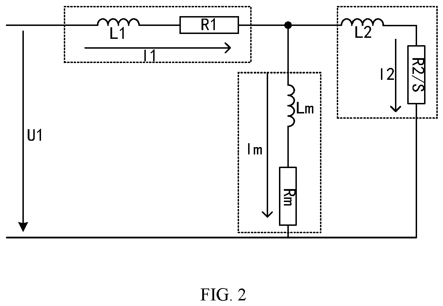

In addition, as shown in FIG. 2, which is a schematic diagram of the equivalent circuit of the induction motor involved in the embodiment of the present application. The stator branch is electrically connected to the rotor branch and the excitation branch respectively, and the excitation branch is electrically connected to the rotor branch. The stator branch includes a resistor R1 and an inductor L1; the rotor branch includes a resistor R2 and an inductor L2; the excitation branch includes a resistor Rm and an inductor Lm. Among them, S in the rotor branch is the slip rate of the motor speed.

The method for controlling the induction motor of the present application may include steps S10 to S30:
Step S10: obtaining initial equivalent parameters of the equivalent circuit of the induction motor in response to that a motor speed is zero; determining an optimal starting frequency of the induction motor according to the initial equivalent parameters; determining a starting voltage according to the optimal starting frequency and a preset safe starting current; and enabling the induction motor to enter a starting operation phase according to the optimal starting frequency and the starting voltage.

In this embodiment, before starting the induction motor (that is, before the induction motor enters the starting operation phase), the motor driver provided in the present application can accurately obtain the initial equivalent parameters of the equivalent circuit of the induction motor when the motor speed is zero, thereby providing accurate and reliable values support for the subsequent determination of the optimal starting frequency; then, the optimal starting frequency of the induction motor can be accurately obtained according to the initial equivalent parameters, and the starting voltage is determined according to the optimal starting frequency and the safe starting current required by the induction motor (that is, the preset safe starting current); and then the induction motor is started according to the optimal starting frequency and the starting voltage, so that the induction motor enters the starting operation phase. This not only ensures the smoothness of the induction motor starting process, but also effectively shortens the starting time of the induction motor and reduces the energy loss of the induction motor during the starting operation phase, thereby effectively improving the starting ability of the induction motor.

It should be noted that the initial equivalent parameters can can use pre-measured values (i.e., pre-configured based on the human-computer interaction interface) or obtained through the operation of automatic parameter identification. The preset safe starting current is also customized according to application requirements, and the present application does not impose any restrictions here.

In a specific embodiment, if the initial equivalent parameters of the induction motor when the motor speed is zero are pre-configured based on the human-computer interaction interface, that is, the initial equivalent parameters are preset, then the optimal starting frequency of the induction motor is determined according to the preset initial equivalent parameters and the preset starting frequency algorithm, and the starting voltage is calculated according to the optimal starting frequency and the starting current required by the induction motor; next, the induction motor is started according to the optimal starting frequency and the starting voltage to ensure that the induction motor enters the starting operation phase, thereby achieving a significant improvement in the starting performance and efficiency of the induction motor.

When the initial equivalent parameters of the induction motor at zero speed are obtained through the operation of automatic parameter identification, the voltage and current values of the induction motor in the starting operation phase are first obtained, and the stator branch, the rotor branch and the excitation branch are respectively subjected to parameter identification processing according to the voltage value and the current value to obtain the stator equivalent parameters, the rotor equivalent parameters and the excitation equivalent parameters of the induction motor in the starting operation phase, and the stator equivalent parameters, the rotor equivalent parameters and the excitation equivalent parameters of the induction motor in the starting operation phase are used as the initial equivalent parameters of the induction motor in the starting operation phase; next, the optimal starting frequency of the induction motor is determined according to the initial equivalent parameters and a preset starting frequency algorithm, and the starting voltage is calculated according to the optimal starting frequency and the starting current required by the induction motor; then, the induction motor is started according to the optimal starting frequency and the starting voltage to ensure that the induction motor can be started with the most suitable starting voltage and the optimal starting frequency in the starting operation phase, thereby avoiding problems such as motor overload, vibration or damage caused by improper setting of the starting parameters. At the same time, reasonable starting voltage and optimal starting frequency can effectively reduce the energy consumption and wear of the induction motor during startup, increase the service life of the induction motor, and enhance the dynamic response capability of the induction motor, so that the induction motor can enter the steady operation phase faster, thereby improving the operating efficiency and stability of the induction motor.

It should be noted that the preset starting frequency algorithm includes formula (1) and formula (2); formula (1) is as follows:
$\left\{\begin{matrix}n = 0 \\ {Z}_{1} = {R}_{1} + {jωL}_{1} \\ {Z}_{2} = {R}_{2} + {jωL}_{2} \\ {Z}_{m} = {R}_{m} + {jωL}_{m} \\ {Z}_{d} = {Z}_{2} / {Z}_{m} \\ {\dot{I}}_{2} = \frac{{Z}_{m}}{{Z}_{2} + {Z}_{m}} ∗ {I}_{1} \\ {T}_{emst} = \frac{{m}_{1} ∗ ρ ∗ {\left|{I}_{2}\right|}^{2} ∗ {R}_{2}}{2 ω}\end{matrix}\right.$ (1)

Among them, n is the motor speed of the induction motor, and n=0 means that the motor speed of the induction motor is zero; Z₁ is the stator equivalent impedance of the induction motor during the starting operation phase, and R₁ and L₁ are the stator equivalent parameters of the induction motor during the starting operation phase; ω is the angular frequency of the starting current I₁ required by the induction motor, and the starting current I₁ refers to the current value flowing through the stator branch of the induction motor when the motor speed is zero; Z₂ is the rotor equivalent impedance of the induction motor during the starting operation phase, and R₂ and L₂ are the rotor equivalent parameters of the induction motor during the starting operation phase; Zₘ is the excitation equivalent impedance of the induction motor during the starting operation phase, and Rₘ and Lₘ are the excitation equivalent parameters of the induction motor during the starting operation phase; j is an imaginary unit, which is a fixed value and can be customized according to user needs; m₁ is the number of stator winding phases of the stator branch, and *ρ* is the number of magnetic pole pairs of the induction motor; Tₑₘₛₜ is the starting torque of the induction motor when the motor speed is zero, and the starting torque is also called the motor electromagnetic torque of the induction motor during the starting operation phase. In addition, R₁ is the resistance value of the resistor R1 of the stator branch during the starting operation phase, L₁ is the inductance value of the inductor L1 of the stator branch during the starting operation phase; R₂ is the resistance value of the resistor R2 of the rotor branch during the starting operation phase, and L₂ is the inductance value of the inductor L2 of the rotor branch during the starting operation phase; Rₘ is the resistance value of the resistor Rm of the excitation branch during the starting operation phase, and L₂ is the inductance value of the inductor Lm of the excitation branch during the starting operation phase; I₂ is the current value flowing through the rotor branch of the induction motor when the motor speed is zero; *İ*₂ is the phasor of the rotor current I₂, and Z_{d} refers to the equivalent impedance of the rotor branch and the excitation branch in parallel when the motor speed is zero.

Formula (2) is as follows:
${f}_{s 0} = max \left\{{\left.{T}_{emst}\left(f\right)\right|}_{{I}_{1} = {1}_{st} , n = 0}\right\} = max \left\{{\left.{\left|{I}_{2}\right|}^{2}\right|}_{{I}_{1} = {1}_{st} , n = 0}\right\}$ (2)

Where, fₛ₀ is the optimal starting frequency of the induction motor when the motor speed is zero. The optimal starting frequency obtained by formula (2) can be understood as the frequency at which the induction motor can produce the maximum "torque/current ratio" when the motor speed is zero; I₁=1ₛₜ refers to the starting current I₁ of the induction motor in the first starting operation phase 1ₛₜ, and n=0 means that the motor speed of the induction motor is zero; Tₑₘₛₜ is the starting torque of the induction motor when the motor speed is zero; I₂ is the current value flowing through the rotor branch of the induction motor when the motor speed is zero.

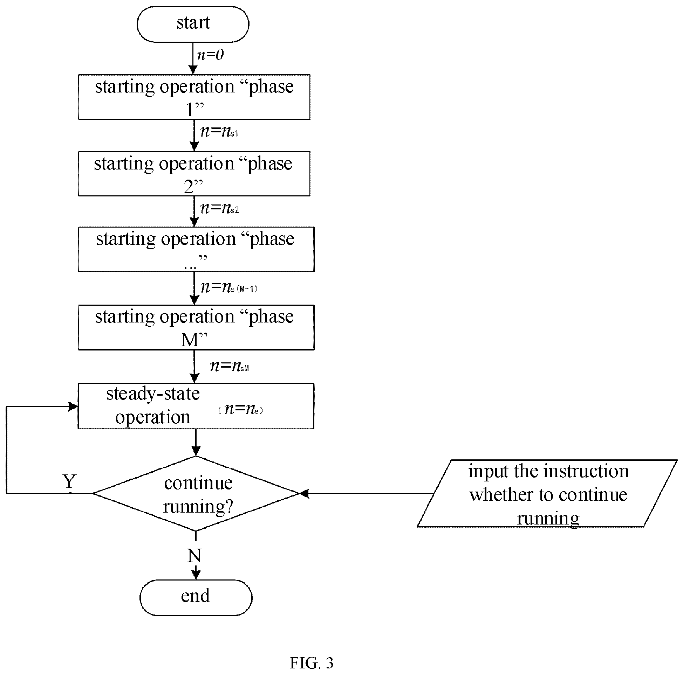

In another embodiment, referring to FIG. 3, which is a multi-phase startup control flow chart involved in the embodiment of the present application. The starting operation phase can be divided into multiple operation phases, for example, starting operation "phase 1", starting operation "phase 2", starting operation "phase ..." and starting operation "phase M". Each starting operation "phase *" includes the motor starting speed speed and the final speed of the motor speed, and the final speed of each starting operation phase is the starting speed of the next starting operation phase of the starting operation phase. In addition, the final speed of the last starting operation phase can be equal to the steady operation speed of the induction motor in the steady operation phase, or a value close to the steady operation speed. For example, in FIG. 3, the starting speed of phase 1 is n=0 and the final speed is n=nₛ₁, the starting speed of phase 2 is n=nₛ₁ and the final speed is n=nₛ₂, ..., the starting speed of phase M is n=n_{s(M-1)} and the final speed is n=n_{sM}; in addition, phase M refers to the last starting operation phase, and the final speed n_{sM} in phase M is the steady operation speed nₑ of the induction motor in the steady operation phase, or a value close to the steady operation speed nₑ.

For example, when the induction motor is adjusted from a state with a motor speed of n1, such as n1=0, to another state with a speed of n2, the optimal starting frequency fₛ₀ and starting voltage V1 in the n1 state are adjusted to the optimal frequency fₛ₁ and driving voltage V2 in the n2 state according to a linear relationship within the set time T; and the time T is predetermined and input according to the rotational inertia and load conditions of the system.

Step S20: obtaining a motor starting speed of the induction motor during the starting operation phase; in response to that the motor starting speed accelerates to the same as a preset steady operation speed, determining that the induction motor switches from the starting operation phase to a steady operation phase, and obtaining voltage and current values of the induction motor in the steady operation phase; identifying parameters of the stator branch, the rotor branch and the excitation branch according to the voltage and current values; and determining an optimal operation frequency of the induction motor according to the identified parameters.

In this embodiment, after the induction motor is enabled to enter the starting operation phase according to the starting voltage determined by the optimal starting frequency and the required safe starting current, the motor starting speed of the induction motor in the starting operation phase is collected according to the preset speed collection frequency, until the collected motor starting speed is accelerated to be equal to the steady operation speed nₑ of the induction motor in the steady operation phase, or is within the speed allowable error range corresponding to the steady operation speed nₑ (i.e., a value close to the steady operation speed nₑ), then it is determined that the motor starting speed is accelerated to be consistent with the preset steady operation speed, and then it can be determined that the induction motor switches efficiently and smoothly from the starting operation phase to the steady operation phase; next, the voltage and current values of the induction motor in the steady operation phase are obtained, and the stator branch, the rotor branch and the excitation branch are efficiently identified according to the voltage and current values, thereby significantly improving the accuracy of parameter identification, and the optimal operation frequency of the induction motor can be accurately obtained according to the identified parameters.

It should be noted that during the startup process, the voltage value is linearly related to the current value, so the voltage value can represent the current value, and vice versa.

In a specific embodiment, when it is determined that the motor starting speed has accelerated to be consistent with the preset steady operation speed, the motor starting speed is the steady operation speed nₑ, or when the motor starting speed is close to the steady operation speed nₑ, the current value of the stator branch is used as the operating current; the optimal operation frequency is calculated based on the operating current and the preset optimal frequency solution algorithm, and the driving voltage is calculated according to the optimal operation frequency and the operating current; then, the induction motor is driven to operate in a steady state according to the optimal operation frequency and driving voltage, ensuring that the induction motor maintains high efficiency during the steady-state operation, thereby significantly improving the performance of the induction motor in the steady-state operation phase and ensuring that the induction motor operates safely and efficiently.

It should be noted that the steady operation speed of the induction motor in the steady operation phase is a fixed value, which can be customized according to application requirements.

The preset optimal frequency solution algorithm includes formula (3) and formula (4), where formula (3) is as follows:
$\left\{\begin{matrix}n = {n}_{sM} \\ {\dot{I}}_{2} ′ = \frac{{Z}_{m}}{{Z}_{2} + {Z}_{m}} ∗ {I}_{1} ′ \\ {T}_{ems 1} = \frac{{m}_{1} ∗ ρ ∗ {\left|{I}_{2}′\right|}^{2} ∗ {R}_{2}}{2 S ∗ {ω}_{1}}\end{matrix}\right.$ (3)

Among them, n=n_{sM} means that the motor speed of the induction motor is the final speed n_{sM} in phase M, (that is, the motor starting speed); I₁' refers to the current flowing through the stator branch when the motor starting speed is the steady operation speed nₑ or close to the steady operation speed nₑ, that is, the operating current; ω is the angular frequency of the operating current I₁'; Z₂ refers to the equivalent impedance of the rotor of the induction motor at the starting operation phase, and R₂ is the resistance value of the resistor R2 of the rotor branch at the starting operation phase; Zₘ refers to equivalent impedance of the excitation of the induction motor at starting operation phase, and m₁ is the number of stator winding phases of the stator branch; *ρ* is the number of magnetic pole pairs of the induction motor; Tₑₘₛ₁ is the operating torque when the motor starting speed is the steady operation speed nₑ or close to the steady operation speed nₑ; *İ*₂' is the phasor of the rotor current *İ*₂' flowing through the rotor branch when the motor starting speed is the steady operation speed nₑ or close to the steady operation speed nₑ; S is the slip rate of the rotor speed in the rotor branch when the motor starting speed is the steady operation speed nₑ or close to the steady operation speed nₑ.

Formula (4) is as follows:
${f}_{sM} = max \left\{{\left.{T}_{ems 1}\left(f\right)\right|}_{{I}_{1} ′ = {1}_{sM} , n = {n}_{sM}}\right\} = max \left\{{\left.{\left|{I}_{2}′\right|}^{2}\right|}_{{I}_{1} ′ = {1}_{sM} , n = {n}_{sM}}\right\}$ (4)

Among them, f_{sM} is the optimal operation frequency, which is the frequency at which the induction motor can produce the maximum "torque/current ratio" when the final speed n_{sM} of the induction motor in phase M is the steady operation speed nₑ or is close to the steady operation speed nₑ; I₁'=1_{sM} refers to the operating current I₁' when the induction moter is at the last starting operation phase (i.e. phase M); I₂ is the current value flowing through the rotor branch of the induction motor when the final speed n_{sM} is the steady operation speed nₑ or close to the steady operation speed nₑ.

Step S30: driving the induction motor to operate in the steady operation phase according to the optimal operation frequency; obtaining an actual motor speed of the induction motor in response to that the induction motor runs in the steady operation phase; and adjusting a driving voltage according to the actual motor speed to maintain a steady-state operation of the induction motor.

In this embodiment, after driving the induction motor to continue steady-state operation according to the optimal operation frequency and driving voltage, the actual motor speed of the induction motor in the steady-state operation phase is detected in real time; that is, by real-time detection of the actual motor speed of the induction motor in the steady-state operation phase, the driving voltage of the induction motor is adjusted to dynamically maintain the steady-state operation of the induction motor, thereby achieving a significant improvement in the operating efficiency of the induction motor and a comprehensive optimization of the starting capability without increasing the cost of the inverter.

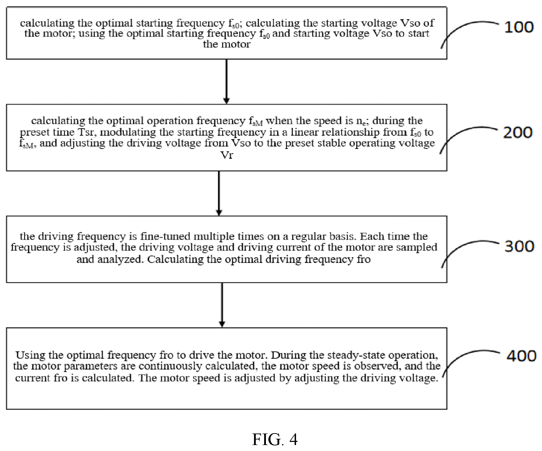

Further, in another embodiment, referring to FIG. 4, which is a control process block diagram involved in the solution of the embodiment of the present application. The method for controlling the induction motor provided in the present application also includes steps 100 to 400.

Step 100: when the motor starts running, calculating the optimal starting frequency fₛ₀ based on the motor parameters when the speed is zero. Calculating the starting voltage Vso of the motor based on the motor parameters and the required safe starting current at this time. Using the optimal starting frequency fₛ₀ and starting voltage Vso to start the motor.

Step 200: when the motor starts to reach the required steady operation speed nₑ, calculating the optimal operation frequency f_{sM} when the speed is nₑ based on the motor parameters when the speed is zero. During the preset time Tsr, modulating the starting frequency in a linear relationship from fₛ₀ to f_{sM}, and adjusting the driving voltage from Vso to the preset stable operating voltage Vr.

Step 300: when the motor speed is nₑ and running in a steady state, the driving frequency is fine-tuned multiple times on a regular basis. Each time the frequency is adjusted, the driving voltage and driving current of the motor are sampled and analyzed to establish and solve the simultaneous equation group related to the motor parameters. Using the obtained motor parameters to calculate the optimal driving frequency fro (that is, the optimal actual frequency fse) at the current speed.

Step 400: when the motor speed is nₑ and the motor is running in a steady state, the optimal frequency fro is configured to drive the motor. During the steady-state operation, the motor parameters are continuously calculated, the motor speed is observed, and the current fro is calculated based on the new motor parameters. If the motor speed deviates from the required speed nₑ, the motor speed is adjusted by adjusting the driving voltage so that the motor can run stably at nₑ.

In summary, the present application provides a method for controlling the induction motor to improve the operating efficiency and optimize the starting capability of the induction motor. Specifically, the present application aims to improve the characteristics of insufficient starting torque when the motor is running. The motor driver provided by the present application identifies the initial equivalent parameters of the equivalent circuit of the induction motor when the motor speed is zero, and the smooth and efficient starting of the induction motor is realized based on the optimal starting frequency obtained by initial equivalent parameters and the starting voltage determined by combining the preset safe starting current, thereby significantly improving the starting ability of the induction motor; next, after starting the induction motor into the starting operation phase according to the optimal starting frequency and starting voltage, the motor starting speed of the induction motor is detected in real time. When the motor starting speed accelerates to be consistent with the preset steady operation speed, it indicates that the induction motor has successfully transitioned from the starting phase to steady operation phase. During the steady operation phase, the voltage and current values of the induction motor are then obtained. Based on the drive voltage and current values, the parameters of the stator branch, rotor branch and excitation branch are identified, and based on the identified parameters, the optimal operation frequency of the induction motor can be accurately obtained; next, the induction motor is driven to operate in the steady operation phase according to the optimal operation frequency, thereby ensuring that the induction motor maintains high performance during the steady-state operation; then, through real-time detection of the actual motor speed during the induction motor operating in the steady operation phase, the driving voltage is adjusted according to the actual motor speed to dynamically maintain the steady-state operation of the induction motor, thereby achieving a significant improvement in the operating efficiency and the comprehensive optimization of the start-up capability of the induction motor without increasing the cost of the inverter.

Furthermore, based on the first embodiment of the method for controlling the induction motor of the present application, a second embodiment of the method for controlling the induction motor of the present application is proposed.

In some feasible embodiments, the above step S30: adjusting the driving voltage according to the actual motor speed to maintain the steady-state operation of the induction motor also includes the following steps S301 to S303:
Step S301: obtaining the updated equivalent parameters of the induction motor during the steady-state operation and detect whether the actual motor speed deviates from the steady operation speed.

In this embodiment, the updated equivalent parameters of the induction motor during the steady-state operation are identified and the actual motor speed deviates from the preset steady operation speed, and the actual motor speed of the induction motor can be compared with the preset steady-state operation speed in real time. Once a deviation is discovered, the adjustment mechanism is immediately triggered, such as adjusting the driving voltage, etc. to ensure that the induction motor can quickly and accurately return to a steady operation state.

Step S302: if the actual motor speed deviates from the steady operation speed, adjusting the driving voltage according to the updated equivalent parameter to maintain the steady-state operation of the induction motor.

In this embodiment, if the actual motor speed of the induction motor deviates from the steady operation speed during the steady-state operation phase, the driving voltage is adjusted according to the updated equivalent parameters, so that the actual motor speed of the induction motor returns to and is stably maintained consistent with the preset steady operation speed, so as to maintain the steady-state operation of the induction motor, thus ensuring the continuity and stability of the steady-state operation of the induction motor.

Step S303: if the actual motor speed does not deviate from the steady operation speed, it is determined that the induction motor maintains steady-state operation.

In this embodiment, if the actual motor speed of the induction motor in the steady-state operation phase does not deviate from the steady operation speed, the induction motor is continued to be driven to maintain steady-state operation according to the optimal operation frequency and driving voltage.

In other feasible embodiments, the above step S302: obtaining the updated equivalent parameters of the induction motor in steady-state operation can also include the following implementation steps S3021 to S3023:
Step S3021: fine-tuning the driving frequency of the induction motor during the steady-state operation at a current fine-tuning moment to obtain a current fine-tuning frequency; collecting a historical fine-tuning frequency obtained by fine-tuning the driving frequency of the induction motor during the steady-state operation at a previous fine-tuning moment of the current fine-tuning moment; and collecting a future fine-tuning frequency obtained by fine-tuning the driving frequency of the induction motor during the steady-state operation at a next fine-tuning moment of the current fine-tuning moment.

In this embodiment, after determining that the induction motor is in steady-state operation when the motor starting speed is the steady operation speed nₑ, or is close to the steady operation speed nₑ, the driving frequency of the induction motor in steady-state operation is fine-tuned at multiple times regularly to obtain multiple fine-tuning frequencies, thereby providing complete values support for the subsequent sampling and analysis of the voltage and current of the induction motor in steady-state operation. Specifically, the driving frequency of the induction motor in steady-state operation is fine-tuned at the current moment to obtain the current fine-tuning frequency, and the historical fine-tuning frequency obtained by fine-tuning the driving frequency of the induction motor in steady-state operation at the previous fine-tuning moment of the current fine-tuning moment is collected, and the future fine-tuning frequency obtained by fine-tuning the driving frequency of the induction motor in steady-state operation at the next fine-tuning moment of the current fine-tuning moment is collected, thereby ensuring the timeliness and continuity between the multiple fine-tuning frequencies.

In another embodiment, the historical fine-tuning frequency is (1-ΔL)f, where f is the current fine-tuning frequency, and ΔL is a value in the interval (0.01, 0.5); the future fine-tuning frequency is (1+ΔH)f, where f is the current fine-tuning frequency, and ΔH is a value in the interval (0.01, 0.5).

Step S3022: constructing a full-rank equivalent parameter simultaneous equation group based on the current fine-tuning frequency, the historical fine-tuning frequency and the future fine-tuning frequency.

In this embodiment, a full-rank equivalent parameter simultaneous equation group is constructed by the current results and voltage results obtained by the fine-tuning frequency value (i.e., the current fine-tuning frequency, the historical fine-tuning frequency, and the future fine-tuning frequency) collected at multiple continuous fine-tuning moments, thereby providing complete value for the subsequent acquisition of the updated equivalent parameters of the induction motor to form a full-rank equation group (i.e., a full-rank equivalent parameter simultaneous equation group).

Step S3023: determining the updated equivalent parameters of the induction motor based on the full-rank equivalent parameter simultaneous equation group.

In this embodiment, by solving the simultaneous equation group, the updated equivalent parameters of the induction motor can be accurately and quickly determined, so that the steady-state operation of the induction motor can be dynamically maintained according to the obtained updated equivalent parameters, ensuring that the induction motor can achieve optimal performance in actual operation.

In some feasible embodiments, the above step S3022: constructing a full-rank equivalent parameter simultaneous equation group according to the current fine-tuning frequency, the historical fine-tuning frequency and the future fine-tuning frequency may also include the following implementation steps A10 to A30:
Step A10: respectively obtaining the current driving voltage and current driving current of the induction motor at the current fine-tuning frequency, the historical driving voltage and historical driving current of the induction motor at the historical fine-tuning frequency, and the future driving voltage and future driving current of the induction motor at the future fine-tuning frequency;
In this embodiment, while using discrete Fourier analysis and adopting a preset current calculation algorithm to respectively calculate the current driving current of the induction motor at the current fine-tuning frequency, the historical driving current of the induction motor at the historical fine-tuning frequency, and the future driving current of the induction motor at the future fine-tuning frequency, discrete Fourier analysis and a preset voltage calculation algorithm are also configured to respectively calculate the current driving voltage of the induction motor at the current fine-tuning frequency, the historical driving voltage of the induction motor at the historical fine-tuning frequency, and the future driving voltage of the induction motor at the future fine-tuning frequency.

For example, taking the calculation of the current driving current under the current fine-tuning frequency as an example, the sine component Iₛ and cosine component I_{c} of the fundamental wave Iᵢ of the current driving current and the phase angle *φᵢ* of the current driving current are calculated. The preset current calculation algorithm is shown in the following formula (5):
$\left\{\begin{matrix}{I}_{s} = \frac{2 Δ t}{N} {\sum }_{k = 0}^{N} \left[i\left(k∗Δt\right)sin\left(k∗Δt\right)\right] \\ {I}_{c} = \frac{2 Δ t}{N} {\sum }_{k = 0}^{N} \left[i\left(k∗Δt\right)cos\left(k∗Δt\right)\right] \\ {I}_{i} = \sqrt{{{I}_{s}}^{2} + {{I}_{c}}^{2}} \\ {φ}_{i} = {tan}^{- 1} \left({I}_{s}/{I}_{i}\right)\end{matrix}\right.$ (5)

Where, Iᵢ is the fundamental wave of the current driving current under the current fine-tuning frequency, Iₛ is the sine component of the current driving current, I_{c} is the cosine component of the current fundamental wave Iᵢ, *φᵢ* is the phase angle of the current driving current Iᵢ, Δt is the interval time of sampling the current driving current, N is the sampling frequency of the current driving current, and i(k*Δt) is the current peak value i reached when the induction motor is sampled at the Kth sampling frequency during the interval time Δt in the steady-state operation phase.

In another embodiment, taking the calculation of the current driving current under the current fine-tuning frequency as an example, the sine component Us and cosine component Uc of the fundamental wave U₁ of the current driving voltage and the phase angle *φᵤ* of the current driving current are calculated, and the preset voltage calculation algorithm is shown in the following formula (6):
$\left\{\begin{matrix}{U}_{s} = \frac{2 Δ t}{N} {\sum }_{k = 0}^{N} \left[u\left(k∗Δt\right)sin\left(k∗Δt\right)\right] \\ {U}_{c} = \frac{2 Δ t}{N} {\sum }_{k = 0}^{N} \left[u\left(k∗Δt\right)cos\left(k∗Δt\right)\right] \\ {U}_{1} = \sqrt{{{U}_{s}}^{2} + {{U}_{c}}^{2}} \\ {φ}_{u} = {tan}^{- 1} \left({U}_{s}/{U}_{i}\right)\end{matrix}\right.$ (6)

Where, Us is the sine voltage component of the fundamental wave U₁ of the current driving voltage, Uc is the cosine component of the fundamental wave U₁, *φᵤ* is the voltage phase angle of the current driving voltage U1 shown in FIG. 2, U₁ is the fundamental wave of the current driving voltage U1, Δt is the sampling interval of the current driving voltage U1, and the sampling interval of the current driving voltage U1 is the same as the sampling interval of the current driving current I₁'; N is the sampling frequency of the current driving voltage U1, and the sampling frequency of the current driving voltage U1 is the same as the sampling frequency of the current driving current I₁'; u(k*Δt) is the voltage peak value u reached when the induction motor is sampled at the Kth sampling frequency during the interval time Δt in the steady-state operation phase.

Step A20: constructing a current equivalent parameter model based on the current fine-tuning frequency, the current driving voltage and the current driving current, constructing a historical equivalent parameter model based on the historical fine-tuning frequency, the historical driving voltage and the historical driving current, and constructing a future equivalent parameter model based on the future fine-tuning frequency, the future driving voltage and the future driving current;
In this embodiment, the current equivalent parameter model can be accurately constructed based on the current fine-tuning frequency, the current driving voltage and the current driving current; the historical equivalent parameter model can be accurately constructed based on the historical fine-tuning frequency, the historical driving voltage and the historical driving current; and the future equivalent parameter model can be accurately constructed based on the future fine-tuning frequency, the future driving voltage and the future driving current.

It should be noted that the current equivalent parameter model is shown in the following formula (7):
$\left\{\begin{matrix}{Z}_{11} = {R}_{1} ′ + j \left(2{πf}_{id 1}\right) {L}_{1} ′ \\ {Z}_{21} = {R}_{2} ′ / {S}_{1} + j \left(2{πf}_{id 2}\right) {L}_{2} ′ \\ {Z}_{m 1} = {R}_{m} ′ + j \left(2{πf}_{id 2}\right) {L}_{m} ′ \\ {Z}_{d 1} = {Z}_{21} / / {Z}_{m 1} \\ {\dot{I}}_{11} = \frac{{\dot{U}}_{11}}{{Z}_{21} + {Z}_{m 1}}\end{matrix}\right.$ (7)

Where, f_{id1} refers to the current fine-tuning frequency; Z₁₁ is the stator equivalent impedance of the stator branch at the current fine-tuning frequency f_{id1}, and R₁' and L₁'is the stator equivalent parameter of the induction motor in the steady-state operation phase; Z₂₁ is the rotor equivalent impedance of the rotor branch at the current fine-tuning frequency f_{id1}, and R₂' and L₂' is the rotor equivalent parameter of the induction motor in the steady-state operation phase; Zₘ₁ is the excitation equivalent impedance of the excitation branch at the current fine-tuning frequency f_{id1}, and Rₘ' and Lₘ' are the excitation equivalent parameter of the induction motor in the steady-state operation phase; *İ*₁₁ is the phase of the stator current (i.e., the current driving current) flowing through the stator branch at the current fine-tuning frequency f_{id1}, *U̇*₁₁ is the phase of the stator voltage (i.e., the current driving voltage) acting on both ends of the stator branch at the current fine-tuning frequency f_{id1}; Z_{d1} is the equivalent impedance of the rotor branch in parallel with the excitation branch at the current fine-tuning frequency f_{id1}, and S₁ is the slip rate of the rotor speed in the rotor branch at the current fine-tuning frequency f_{id1}.

It should be noted that the historical equivalent parameter model is shown in the following formula (8):
$\left\{\begin{matrix}{Z}_{12} = {R}_{1} ′ + j \left(2{πf}_{id 2}\right) {L}_{1} ′ \\ {Z}_{22} = {R}_{2} ′ / {S}_{2} + j \left(2{πf}_{id 2}\right) {L}_{2} ′ \\ {Z}_{m 2} = {R}_{m} ′ + j \left(2{πf}_{id 2}\right) {L}_{m} ′ \\ {Z}_{d 2} = {Z}_{22} / / {Z}_{m 2} \\ {\dot{I}}_{12} = \frac{{\dot{U}}_{12}}{{Z}_{22} + {Z}_{m 2}}\end{matrix}\right.$ (8)

Where, f_{id2} refers to the historical fine-tuning frequency; Z₁₂ is the stator equivalent impedance of the stator branch at the historical fine-tuning frequency f_{id2}, and R₁' and L₁' are the stator equivalent parameter of the induction motor in the steady-state operation phase; Z₂₂ is the rotor equivalent impedance of the rotor branch at the historical fine-tuning frequency f_{id2}, and R₂' and L₂' are the rotor equivalent parameter of the induction motor in the steady-state operation phase; Zₘ₂ is the excitation equivalent impedance of the excitation branch at the historical fine-tuning frequency f_{id2}, and Rₘ' and Lₘ' are the excitation equivalent parameter of the induction motor in the steady-state operation phase; *İ*₁₂ is the phase of the stator current (i.e., the historical driving current) flowing through the stator branch at the historical fine-tuning frequency f_{id2}, *U̇*₁₂ is the phase of the stator voltage (i.e., the historical driving voltage) acting on both ends of the stator branch at the historical fine-tuning frequency f_{id2}, and S₂ is the slip rate of the rotor speed in the rotor branch at the historical fine-tuning frequency f_{id2}.

The future equivalent parameter model is shown in the following formula (9):
$\left\{\begin{matrix}{Z}_{13} = {R}_{1} ′ + j \left(2{πf}_{id 3}\right) {L}_{1} ′ \\ {Z}_{23} = {R}_{2} ′ / {S}_{3} + j \left(2{πf}_{id 3}\right) {L}_{2} ′ \\ {Z}_{m 3} = {R}_{m} ′ + j \left(2{πf}_{id 3}\right) {L}_{m} ′ \\ {Z}_{d 3} = {Z}_{23} / / {Z}_{m 3} \\ {\dot{I}}_{13} = \frac{{\dot{U}}_{13}}{{Z}_{23} + {Z}_{m 3}}\end{matrix}\right.$ (9)

Where, f_{id3} refers to the future fine-tuning frequency, Z₁₃ is the stator equivalent impedance of the stator branch at the future fine-tuning frequency f_{id3}, and R₁' and L₁' are the stator equivalent parameter of the induction motor in the steady-state operation phase; Z₂₃ is the rotor equivalent impedance of the rotor branch at the future fine-tuning frequency f_{id3}, and R₂' and L₂' are the rotor equivalent parameter of the induction motor in the steady-state operation phase; Zₘ₃ is the excitation equivalent impedance of the excitation branch at the future fine-tuning frequency f_{id3}, and Rₘ' and Lₘ' are the excitation equivalent parameter of the induction motor in the steady-state operation phase; *İ*₁₃ is the phase of the stator current (i.e., future driving current) flowing through the stator branch at the future fine-tuning frequency f_{id3}, *U̇*₁₃ is the phase of the stator voltage (i.e., future driving voltage) acting on both ends of the stator branch at the future fine-tuning frequency f_{id3}, and S₃ is the slip rate of the rotor speed in the rotor branch at the future fine-tuning frequency f_{id3}.

Step A30: performing model simultaneous processing based on the current equivalent parameter model, the historical equivalent parameter model and the future equivalent parameter model to obtain a full-rank equivalent parameter simultaneous equation group.

In this embodiment, a model simultaneous processing is performed based on the historical equivalent parameter model and the future equivalent parameter model to obtain a full-rank equivalent parameter simultaneous equation group consisting of formulas (7) to (9), thereby solving the updated equivalent parameters of the induction motor under the current condition.

In some feasible embodiments, the above step S3023: determining the updated equivalent parameters of the induction motor according to the full-rank equivalent parameter simultaneous equation group can also include the following implementation steps B10 to B20:
Step B10: performing parameter identification processing on the stator branch, the rotor branch and the excitation branch according to the full-rank equivalent parameter simultaneous equation, and obtaining the stator equivalent parameters, rotor equivalent parameters and excitation equivalent parameters of the induction motor in the steady-state operation phase;
Step B20: using the stator equivalent parameters, the rotor equivalent parameters and the excitation equivalent parameters as the updated equivalent parameters of the induction motor, in determining the optimal frequency of the motor for the required speed.

In this embodiment, after determining the full-rank equivalent parameter simultaneous equation group, the error of solving the nonlinear equation is accumulated, and it is detected whether the error is greater than the preset error threshold. If the error is less than or equal to the preset error threshold, the full-rank equivalent parameter simultaneous equation group composed of formulas (7) to (9) is completed to perform parameter identification processing on the stator branch, rotor branch and excitation branch; the stator equivalent parameters of the stator branch in the steady-state operation phase, the rotor equivalent parameters of the rotor branch in the steady-state operation phase and the excitation equivalent parameters of the excitation branch in the steady-state operation phase can be accurately obtained; and the stator equivalent parameters, rotor equivalent parameters and excitation equivalent parameters are used as the updated equivalent parameters of the induction motor. Such processing can not only ensure the accuracy of parameter identification processing, but also improve the response speed of parameter identification processing, ensuring that the induction motor can achieve the optimal performance state in actual operation.

In another embodiment, if the number of iterations of the nonlinear equation is greater than the preset iteration threshold, the solution obtained is the solution of the equation group. Such processing can improve the adaptability and robustness of parameter identification, and can adjust the strategy in time when the value is abnormal or the model does not match, so as to ensure the stability and accuracy of the entire parameter identification processing.

It should be noted that when the induction motor is in a steady operation phase, if other parameters need to be identified, such as the motor speed needs to be identified, more operation states need to be added to establish equations and solve them. If only some parameters that are sensitive to the environment and operation state are identified, the parameter identification calculation can be simplified. For example, if only the identification of R₁ and L₁, and R₂ and L₂ are considered, the current fine-tuning frequency f_{id1} and the historical fine-tuning frequency f_{id2} are used to solve simultaneous equations established by formulas (7) and (8) to calculate the equivalent parameters of the stator branch and the equivalent parameters of the rotor branch.

In addition, when the induction motor is in a steady operation phase, since the equivalent impedance of the induction motor is related to the motor's driving voltage, driving current, load characteristics and environment, in order to achieve accurate control of the induction motor, the parameter identification operation should be performed frequently when the calculation speed of the controller's micro controller unit (MCU) allows.

In some other feasible embodiments, the above step S302: maintaining the steady-state operation of the induction motor according to the updated equivalent parameters may also include the following implementation steps C10 to C20:
Step C10: according to the updated equivalent parameters, the optimal actual frequency of the induction motor at the steady operation speed can be accurately obtained.

In this embodiment, according to the updated equivalent parameters and the preset optimal frequency calculation algorithm, the optimal actual frequency of the induction motor at the steady operation speed can be accurately obtained.

It should be noted that the updated equivalent parameters at least include the stator equivalent parameters, rotor equivalent parameters and excitation equivalent parameters of the induction motor in the steady-state operation phase.

The preset optimal frequency calculation algorithm at least includes formula (10) and formula (11), where formula (10) is as shown below:

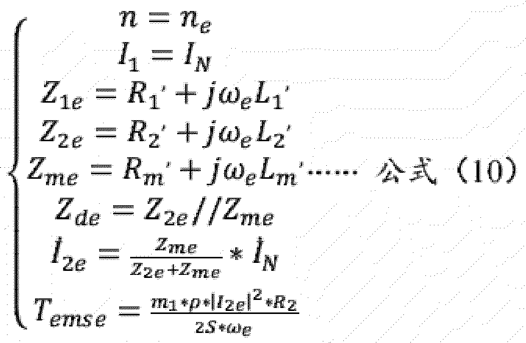

Where, n=nₑ refers to the motor speed of the induction motor is the steady operation speed nₑ; Z₁ₑ is the stator equivalent impedance of the stator branch at the steady operation speed nₑ, and R₁' and L₁' are the stator equivalent parameters of the induction motor in the steady-state operation phase; Z₂ₑ is the equivalent impedance of the rotor branch at the steady operation speed nₑ, and R₂' and L₂' are the rotor equivalent parameters of the induction motor in the steady-state operation phase; Zₘₑ is the excitation equivalent impedance of the excitation branch at the steady operation speed nₑ, and Rₘ' and Lₘ' are the excitation equivalent parameter of the induction motor in the steady-state operation phase; j is the imaginary unit; *ωₑ* is the angular frequency of the stator current I₁ of the stator branch at the steady operation speed nₑ, and the stator current I₁ at this time refers to the unit current I_{N} flowing through the stator branch at the steady operation speed nₑ of the induction motor; m₁ is the number of phases of the stator winding of the stator branch, *ρ* is the number of magnetic pole pairs of the induction motor; Tₑₘₛₑ is the motor electromagnetic torque of the induction motor at the steady operation speed nₑ; I₂ₑ is the current value of the rotor branch at the steady operation speed nₑ; *İ*_{2*e*} is the phasor of the rotor current I₂ₑ, Z_{de} refers to the equivalent impedance of the rotor branch in parallel with the excitation branch when the motor speed is the steady operation speed nₑ.

Formula (11) is as follows:
${f}_{se} = max \left\{{\left.{T}_{emse}\left(f\right)\right|}_{{I}_{1} = {1}_{N} , n = {n}_{e}}\right\} = max \left\{{\left.{\left|{I}_{2 e}\right|}^{2}\right|}_{{I}_{1} = {1}_{N} , n = {n}_{e}}\right\}$ (11)

Where, fₛₑ is the optimal actual frequency of the induction motor, I₁=1_{N} is the unit current I_{N} flowing through the rotor branch when the motor speed of the induction motor is the steady operation speed nₑ, n=nₑ means that the motor speed of the induction motor is the steady operation speed nₑ, I₂ₑ is the current value of the rotor branch at the steady operation speed nₑ.

In addition, it should be noted that the calculation algorithm configured to calculate the adjusted driving voltage is as shown in the following formula (12):
${U}_{d} = \left[{d}_{u}∗\left({n}_{c}-{n}_{e}\right)\right] ∗ {U}_{1}$

Where, U_{d} is the adjusted driving voltage; dᵤ is the proportional increment of the preset adjustment voltage, which can be customized according to application requirements, and the present application does not impose any restrictions on this; n_{c} is the actual motor speed; nₑ is the steady operation speed; U₁ is the driving voltage.

Step C20: After driving the induction motor according to the optimal actual frequency, the driving voltage of the induction motor at the optimal actual frequency is adjusted according to the speed difference between the actual motor speed and the steady operation speed.

In this embodiment, after driving the induction motor according to the optimal actual frequency, the driving voltage of the induction motor at the optimal actual frequency is adjusted according to the speed difference between the actual motor speed and the steady operation speed until after the actual motor speed is adjusted to be consistent with the preset steady operation speed, the adjusted driving voltage is obtained. Next, the steady-state operation of the induction motor is dynamically maintained according to the adjusted driving voltage and the optimal actual frequency, so that the induction motor is always at the optimal performance point at the steady operation phase, thus improving the stability and energy efficiency of the induction motor operation without increasing the cost of the inverter.

In some feasible embodiments, in the above step C20: maintaining the steady-state operation of the induction motor based on the adjusted driving voltage and the optimal actual frequency, the following steps C201 to C203 may also be included:
Step C201: driving the induction motor to run according to the optimal actual frequency and the adjusted driving voltage to obtain the current motor speed of the induction motor;
Step C202: using the current motor speed as the next actual motor speed, returning to the step of detecting whether the actual motor speed deviates from the steady operation speed, and accumulating the number of return executions.

In this embodiment, by driving the induction motor to run according to the optimal actual frequency and the adjusted driving voltage, the current speed of the induction motor can be accurately obtained, and the current motor speed is used as the next actual motor speed; returning to executing the step of detecting whether the actual motor speed deviates from the steady operation speed helps the steady operation of the induction motor.

Step C203: until it is detected that the actual motor speed does not deviate from the steady operation speed within the preset return times threshold, obtaining the optimal driving frequency and actual driving voltage of the induction motor at the actual motor speed; the induction motor is driven to maintain steady-state operation according to the optimal driving frequency and the actual driving voltage.

In this embodiment, when it is detected that the actual motor speed does not deviate from the steady operation speed within the preset return times threshold, the optimal driving frequency and actual driving voltage of the induction motor at the actual motor speed can be automatically obtained. The optimal driving frequency and actual driving voltage drive the induction motor to maintain steady-state operation, ensuring that the induction motor can continue to operate in an efficient and stable state, thereby significantly improving the reliability and energy efficiency of the motor operation.

In summary, when the motor enters the steady-state operation phase, unlike the traditional frequency conversion control of the induction motor, the driving frequency and driving voltage of the induction motor driver of the present application are determined by the load, the real-time parameters of the motor and the required motor speed. When the motor is started, the required "allowable starting current" can be configured to produce a larger starting torque; when the motor is running in a steady state, the copper loss of the motor can be reduced to a small state. Therefore, the present application can reduce the cost of the induction motor drive controller and improve the motor efficiency. These effects are of positive significance for the application of induction motors.

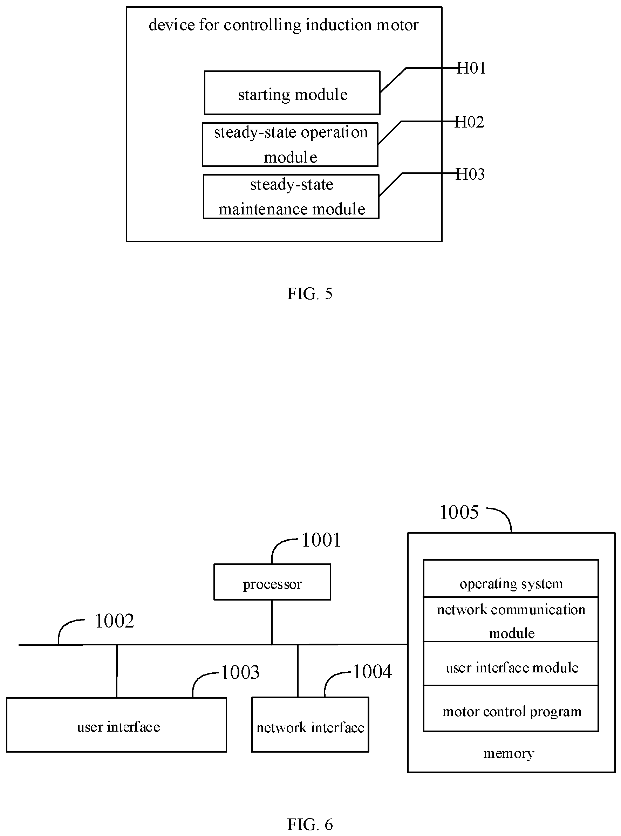

In addition, the present application also provides a device for controlling the induction motor, please referring to FIG. 5, FIG. 5 is a structural schematic diagram of the device for controlling the induction motor involved in the embodiment of the present application.

The device for controlling the induction motor of the present application includes:
Starting module H01, configured to obtain the initial equivalent parameters of the equivalent circuit of the induction motor when the motor speed is zero, determine the optimal starting frequency of the induction motor according to the initial equivalent parameters, and determine the starting voltage according to the optimal starting frequency and the preset safe starting current, and enable the induction motor to enter the starting operation phase according to the optimal starting frequency and the starting voltage;
Steady-state operation module H02, configured to obtain the motor starting speed of the induction motor during the starting operation phase; when the motor starting speed is accelerated to be consistent with the preset steady operation speed, the induction motor is determined to switch from the starting operation phase to the steady operation phase; configured to obtain the voltage and current values of the induction motor in the steady operation phase, perform parameter identification on the stator branch, the rotor branch and the excitation branch according to the voltage and current values, and determine the optimal operation frequency of the induction motor according to the identified parameters;
The steady-state maintenance module H03, configured to drive the induction motor to operate in the steady operation phase according to the optimal operation frequency, obtain the actual motor speed of the induction motor when the induction motor is running in the steady operation phase, and adjust the driving voltage according to the actual motor speed to maintain the steady-state operation of the induction motor.

The various functional modules of the device for controlling the induction motor of the present application implement the steps of the method for controlling the induction motor of the present application as described above when running.

In addition, the present application also provides an equipment for controlling the induction motor. Please referring to FIG. 6, which is a structural schematic diagram of the equipment for controlling the induction motor involved in the embodiment of the present application. The equipment for controlling the induction motor of the embodiment of the present application can specifically be an equipment for locally running the method for controlling the induction motor.

As shown in FIG. 6, the equipment for controlling the induction motor of the embodiment of the present application may include: a processor 1001, such as a CPU, a communication bus 1002, a user interface 1003, a network interface 1004, and a memory 1005. Among them, the communication bus 1002 is configured to realize the connection and communication between these components. The user interface 1003 may include a display, an input unit such as a keyboard, and the optional user interface 1003 may also include a standard wired interface and a wireless interface. The network interface 1004 may optionally include a standard wired interface and a wireless interface (such as a Wi-Fi interface).

The memory 1005 is arranged on the main body of the equipment for controlling the induction motor, and a program is stored on the memory 1005. When the program is executed by the processor 1001, the corresponding operation is implemented. The memory 1005 is also configured to store parameters for use by the equipment for controlling the induction motor. The memory 1005 may be a high-speed RAM memory, or a stable memory (non-volatile memory), such as a disk memory. The memory 1005 may also be a storage device independent of the aforementioned processor 1001.

Those skilled in the art can understand that the structure of the equipment for controlling the induction motor shown in FIG. 6 does not constitute a limitation on the equipment for controlling the induction motor, and may include more or fewer components than shown in the figure, or combine certain components, or arrange components differently.

As shown in FIG. 6, the memory 1005 as a storage medium may include an operating system, a network communication module, a user interface module, and a motor control program of the equipment for controlling the induction motor.

In the equipment for controlling the induction motor shown in FIG. 6, the processor 1001 may be configured to call the motor control program of the equipment for controlling the induction motor stored in the memory 1005, and execute any of the steps of the above-mentioned method for controlling the induction motor.

In addition, the present application provides a storage medium, which is a computer-readable storage medium. The computer-readable storage medium stores a motor control program, and when the motor control program is executed by the processor, the steps of the above-mentioned method for controlling the induction motor are implemented.

It should be noted that in this article, the terms "include", "comprise" or any other variants thereof are intended to cover non-exclusive inclusion, so that a process, method, article or system including a series of elements includes not only those elements, but also other elements not explicitly listed, or also includes elements inherent to such a process, method, article or system. In the absence of further restrictions, an element defined by the sentence "including a/an..." does not exclude the existence of other identical elements in the process, method, article or system including the element.

The serial numbers of the above-mentioned embodiments of the present application are only for description and do not represent the advantages and disadvantages of the embodiments.

Through the description of the above implementation methods, those skilled in the art can clearly understand that the above-mentioned embodiment method can be implemented by means of software plus a necessary general hardware platform, of course, it can also be implemented by hardware, but in many cases the former is a better implementation method. Based on this understanding, the technical solution of the present application can be essentially or partly contributed to the related art in the form of a software product, which is stored in a computer-readable storage medium (such as ROM/RAM, disk, CD) as mentioned above, including several instructions for enabling an equipment for controlling the induction motor (which can be a mobile phone, computer, server, or network device, etc.) to execute the methods described in each embodiment of the present application.

## Claims

1. A method for controlling an induction motor, applied to a motor driver, wherein the motor driver is electrically connected to the induction motor, and an equivalent circuit of the induction motor comprises a stator branch, a rotor branch and an excitation branch;
wherein the method for controlling the induction motor comprises:
(S10), obtaining initial equivalent parameters of the equivalent circuit of the induction motor in response to a motor speed being zero; determining an optimal starting frequency of the induction motor according to the initial equivalent parameters; determining a starting voltage according to the optimal starting frequency and a preset safe starting current; and enabling the induction motor to enter a starting operation phase according to the optimal starting frequency and the starting voltage;
wherein the optimal starting frequency is a frequency at which the induction motor produces a maximum torque/ current ratio when the motor speed is zero;
the method **characterised by**
(S20), obtaining a motor starting speed of the induction motor during the starting operation phase; in response to the motor starting speed accelerating to the same as a preset steady operation speed, determining that the induction motor switches from the starting operation phase to a steady operation phase, and obtaining voltage and current values of the induction motor in the steady operation phase; identifying parameters of the stator branch, the rotor branch and the excitation branch according to the voltage and current values; and determining an optimal operation frequency of the induction motor according to the identified parameters; and
(S30), driving the induction motor to operate in the steady operation phase according to the optimal operation frequency; obtaining an actual motor speed of the induction motor in response to the induction motor running in the steady operation phase; and adjusting a driving voltage according to the actual motor speed to maintain a steady-state operation of the induction motor;
wherein the adjusting the driving voltage according to the actual motor speed to maintain the steady-state operation of the induction motor comprises:
(S301), obtaining updated equivalent parameters of the induction motor in response to the induction motor being in the steady-state operation, and detecting whether the actual motor speed deviates from the steady operation speed;
(S302), in response to the actual motor speed deviating from the steady operation speed, adjusting the driving voltage according to the updated equivalent parameters to maintain the steady-state operation of the induction motor; and
(S303), in response to the actual motor speed not deviating from the steady operation speed, determining that the induction motor maintains the steady-state operation;
wherein
the obtaining the updated equivalent parameters of the induction motor in response to the induction motor being in the steady-state operation comprises:
(S3021), fine-tuning the driving frequency of the induction motor during the steady-state operation at a current fine-tuning moment to obtain a current fine-tuning frequency; collecting a historical fine-tuning frequency obtained by fine-tuning the driving frequency of the induction motor during the steady-state operation at a previous fine-tuning moment of the current fine-tuning moment; and collecting a future fine-tuning frequency obtained by fine-tuning the driving frequency of the induction motor during the steady-state operation at a next fine-tuning moment of the current fine-tuning moment;
(S3022), constructing a full-rank equivalent parameter simultaneous equation group based on the current fine-tuning frequency, the historical fine-tuning frequency and the future fine-tuning frequency; and
(S3023), determining the updated equivalent parameters of the induction motor based on the full-rank equivalent parameter simultaneous equation group;
wherein the optimal operation frequency is a frequency at which the induction motor produces a maximum torque/ current ratio when the speed of the induction motor is the steady operation speed or is close to the steady operation speed.

2. The method according to claim 1, wherein the constructing the full-rank equivalent parameter simultaneous equation group based on the current fine-tuning frequency, the historical fine-tuning frequency and the future fine-tuning frequency comprises:
(A10), obtaining a current driving voltage and a current driving current of the induction motor at the current fine-tuning frequency respectively, a historical driving voltage and a historical driving current of the induction motor at the historical fine-tuning frequency, and a future driving voltage and a future driving current of the induction motor at the future fine-tuning frequency;
(A20), constructing a current equivalent parameter model based on the current fine-tuning frequency, the current driving voltage and the current driving current; constructing a historical equivalent parameter model based on the historical fine-tuning frequency, the historical driving voltage and the historical driving current; and constructing a future equivalent parameter model based on the future fine-tuning frequency, the future driving voltage and the future driving current; and
(A30), performing model simultaneous processing based on the current equivalent parameter model, the historical equivalent parameter model and the future equivalent parameter model to obtain the full-rank equivalent parameter simultaneous equation group.

3. The method according to claim 1, wherein the determining the updated equivalent parameters of the induction motor based on the full-rank equivalent parameter simultaneous equation group comprises:
(B10), performing parameter identification processing to the stator branch, the rotor branch and the excitation branch respectively to obtain stator equivalent parameters, rotor equivalent parameters and excitation equivalent parameters of the induction motor in a steady-state operation phase according to the full-rank equivalent parameter simultaneous equation group; and
(B20), configuring the stator equivalent parameters, the rotor equivalent parameters and the excitation equivalent parameters as the updated equivalent parameters of the induction motor.

4. The method according to claim 1, wherein the adjusting the driving voltage according to the updated equivalent parameters to maintain the steady-state operation of the induction motor comprises:
(C10), determining an optimal actual frequency of the induction motor at the steady operation speed according to the updated equivalent parameters; and
(C20), after driving the induction motor according to the optimal actual frequency, adjusting the driving voltage of the induction motor at the optimal actual frequency according to a speed difference between the actual motor speed and the steady operation speed, and maintaining the steady-state operation of the induction motor according to a adjusted driving voltage and the optimal actual frequency.

5. The method according to claim 4, wherein the maintaining the steady-state operation of the induction motor according to the adjusted driving voltage and the optimal actual frequency comprises:
(C201), driving the induction motor to operate according to the adjusted driving voltage and the optimal actual frequency to obtain a current motor speed of the induction motor;
(C202), configuring the current motor speed as a next actual motor speed, returning to perform the detecting whether the actual motor speed deviates from the steady operation speed, and accumulating a number of return executions; and
(C203), obtaining an optimal driving frequency and an actual driving voltage of the induction motor at the actual motor speed until it is detected that the actual motor speed does not deviate from the steady operation speed within a preset return number threshold, and driving the induction motor to maintain the steady-state operation according to the optimal driving frequency and the actual driving voltage.

6. A device for controlling an induction motor, comprising:
a starting module (H01), configured to obtain initial equivalent parameters of an equivalent circuit of the induction motor in response to a motor speed being zero, determine an optimal starting frequency of the induction motor according to the initial equivalent parameters, determine a starting voltage according to the optimal starting frequency and a preset safe starting current, and enable the induction motor to enter a starting operation phase according to the optimal starting frequency and the starting voltage;
wherein the optimal starting frequency is a frequency at which the induction motor produces a maximum torque/ current ratio when the motor speed is zero;
**characterised in that** the device comprises:
a steady-state operation module (H02), configured to obtain a motor starting speed of the induction motor during the starting operation phase, in response to the motor starting speed accelerating to the same as a preset steady operation speed, then determine that the induction motor switches from the starting operation phase to a steady operation phase, obtain voltage and current values of the induction motor in the steady operation phase, perform parameter identification on a stator branch, a rotor branch and an excitation branch according to the voltage and current values, and determine an optimal operation frequency of the induction motor according to the identified parameters; and
a steady-state maintenance module (H03), configured to drive the induction motor to operate in the steady operation phase according to the optimal operation frequency, obtain an actual motor speed of the induction motor in response to the induction motor operating in the steady operation phase, and adjust the driving voltage according to the actual motor speed to maintain the steady-state operation of the induction motor;
wherein the steady-state maintenance module (H03) being configured to adjust the driving voltage according to the actual motor speed to maintain the steady-state operation of the induction motor comprises:
the steady-state maintenance module (H03) being configured to obtain updated equivalent parameters of the induction motor in response to the induction motor being in the steady-state operation, and detect whether the actual motor speed deviates from the steady operation speed;
in response to the actual motor speed deviating from the steady operation speed, the steady-state maintenance module (H03) being configured to adjust the driving voltage according to the updated equivalent parameters to maintain the steady-state operation of the induction motor; and
in response to the actual motor speed not deviating from the steady operation speed, the steady-state maintenance module (H03) being configured to determine that the induction motor maintains the steady-state operation;
wherein
the steady-state maintenance module (H03) being configured to obtain the updated equivalent parameters of the induction motor in response to the induction motor being in the steady-state operation comprises:
the steady-state maintenance module (H03) being configured to fine-tun the driving frequency of the induction motor during the steady-state operation at a current fine-tuning moment to obtain a current fine-tuning frequency; collect a historical fine-tuning frequency obtained by fine-tuning the driving frequency of the induction motor during the steady-state operation at a previous fine-tuning moment of the current fine-tuning moment; and collect a future fine-tuning frequency obtained by fine-tuning the driving frequency of the induction motor during the steady-state operation at a next fine-tuning moment of the current fine-tuning moment;
the steady-state maintenance module (H03) being configured to construct a full-rank equivalent parameter simultaneous equation group based on the current fine-tuning frequency, the historical fine-tuning frequency and the future fine-tuning frequency; and
the steady-state maintenance module (H03) being configured to determine the updated equivalent parameters of the induction motor based on the full-rank equivalent parameter simultaneous equation group;
wherein the optimal operation frequency is a frequency at which the induction motor produces a maximum torque/ current ratio when the speed of the induction motor is the steady operation speed or is close to the steady operation speed.

7. An equipment for controlling an induction motor, **characterized by** comprising: a memory (1005), a processor (1001) and a motor control program stored in the memory (1005) and executable on the processor (1001), wherein the processor (1001) implements the steps of the method according to any one of claims 1 to 5 when executing the motor control program.

8. A storage medium, **characterized in that** the storage medium is a computer-readable storage medium, and the computer-readable storage medium stores a motor control program comprising instructions to cause the equipment of claim 7 to execute the steps of the method according to any of claims 1 to 5.

## Patentansprüche

1. Verfahren zur Steuerung eines Induktionsmotors, das bei einem Motortreiber angewendet wird, wobei der Motortreiber elektrisch mit dem Induktionsmotor verbunden ist und eine Ersatzschaltung des Induktionsmotors einen Statorzweig, einen Rotorzweig und einen Erregungszweig umfasst;
wobei das Verfahren zur Steuerung des Induktionsmotors Folgendes umfasst:
(S10), Erhalten anfänglicher Ersatzparameter der Ersatzschaltung des Induktionsmotors in Reaktion darauf, dass eine Motordrehzahl null ist;
Bestimmen einer optimalen Anlauffrequenz des Induktionsmotors gemäß den anfänglichen Ersatzparametern;
Bestimmen einer Anlaufspannung gemäß der optimalen Anlauffrequenz und einem vorgegebenen sicheren Anlaufstrom;
und Bewirken, dass der Induktionsmotor gemäß der optimalen Anlauffrequenz und der Anlaufspannung in eine Anlaufbetriebsphase eintritt;
wobei die optimale Anlauffrequenz eine Frequenz ist, bei der der Induktionsmotor ein maximales Drehmoment/Strom-Verhältnis erzielt, wenn die Motordrehzahl null ist;
**dadurch gekennzeichnet, dass** das Verfahren Folgendes umfasst:
(S20), Erhalten einer Anlaufdrehzahl des Induktionsmotors während der Anlaufbetriebsphase; in Reaktion darauf, dass die Anlaufdrehzahl durch Beschleunigung eine vorgegebene stationäre Betriebsdrehzahl erreicht, Feststellen, dass der Induktionsmotor von der Anlaufbetriebsphase in eine stationäre Betriebsphase wechselt, und Erhalten von Spannungs- und Stromwerten des Induktionsmotors in der stationären Betriebsphase;
Identifizieren von Parametern des Statorzweigs, des Rotorzweigs und des Erregungszweigs gemäß den Spannungs- und Stromwerten;
und Bestimmen einer optimalen Betriebsfrequenz des Induktionsmotors gemäß den identifizierten Parametern; und
(S30), Ansteuern des Induktionsmotors zum Betrieb in der stationären Betriebsphase gemäß der optimalen Betriebsfrequenz;
Erhalten einer tatsächlichen Motordrehzahl des Induktionsmotors in Reaktion darauf, dass der Induktionsmotor in der stationären Betriebsphase läuft;
und Anpassen einer Ansteuerspannung gemäß der tatsächlichen Motordrehzahl, um einen stationären Betrieb des Induktionsmotors aufrechtzuerhalten;
wobei das Anpassen der Ansteuerspannung gemäß der tatsächlichen Motordrehzahl zur Aufrechterhaltung des stationären Betriebs des Induktionsmotors Folgendes umfasst:
(S301), Erhalten aktualisierter Ersatzparameter des Induktionsmotors in Reaktion darauf, dass sich der Induktionsmotor im stationären Betrieb befindet, und Erkennen, ob die tatsächliche Motordrehzahl von der stationären Betriebsdrehzahl abweicht;
(S302), in Reaktion darauf, dass die tatsächliche Motordrehzahl von der stationären Betriebsdrehzahl abweicht, Anpassen der Ansteuerspannung gemäß den aktualisierten Ersatzparametern, um den stationären Betrieb des Induktionsmotors aufrechtzuerhalten; und
(S303), in Reaktion darauf, dass die tatsächliche Motordrehzahl nicht von der stationären Betriebsdrehzahl abweicht, Feststellen, dass der Induktionsmotor den stationären Betrieb aufrechterhält;
wobei das Erhalten der aktualisierten Ersatzparameter des Induktionsmotors in Reaktion darauf, dass sich der Induktionsmotor im stationären Betrieb befindet, Folgendes umfasst:
(S3021), Feinabstimmen der Ansteuerfrequenz des Induktionsmotors während des stationären Betriebs zu einem aktuellen Feinabstimmungszeitpunkt, um eine aktuelle Feinabstimmungsfrequenz zu erhalten;
Erfassen einer historischen Feinabstimmungsfrequenz, die durch Feinabstimmen der Ansteuerfrequenz des Induktionsmotors während des stationären Betriebs zu einem dem aktuellen Feinabstimmungszeitpunkt vorangehenden Feinabstimmungszeitpunkt erhalten wurde;
und Erfassen einer zukünftigen Feinabstimmungsfrequenz, die durch Feinabstimmen der Ansteuerfrequenz des Induktionsmotors während des stationären Betriebs zu einem auf den aktuellen Feinabstimmungszeitpunkt folgenden Feinabstimmungszeitpunkt erhalten wird;
(S3022), Konstruieren eines Gleichungssystems mit vollem Rang für die Ersatzparameter auf der Grundlage der aktuellen Feinabstimmungsfrequenz, der historischen Feinabstimmungsfrequenz und der zukünftigen Feinabstimmungsfrequenz; und
(S3023), Bestimmen der aktualisierten Ersatzparameter des Induktionsmotors auf der Grundlage des Gleichungssystems mit vollem Rang für die Ersatzparameter;
wobei die optimale Betriebsfrequenz eine Frequenz ist, bei der der Induktionsmotor ein maximales Drehmoment/Strom-Verhältnis erzielt, wenn die Drehzahl des Induktionsmotors der stationären Betriebsdrehzahl entspricht oder nahe bei der stationären Betriebsdrehzahl liegt.

2. Verfahren nach Anspruch 1, wobei das Konstruieren des Gleichungssystems mit vollem Rang für die Ersatzparameter auf der Grundlage der aktuellen Feinabstimmungsfrequenz, der historischen Feinabstimmungsfrequenz und der zukünftigen Feinabstimmungsfrequenz Folgendes umfasst:
(A10), Erhalten jeweils einer aktuellen Ansteuerspannung und eines aktuellen Ansteuerstroms des Induktionsmotors bei der aktuellen Feinabstimmungsfrequenz, einer historischen Ansteuerspannung und eines historischen Ansteuerstroms des Induktionsmotors bei der historischen Feinabstimmungsfrequenz und einer zukünftigen Ansteuerspannung und eines zukünftigen Ansteuerstroms des Induktionsmotors bei der zukünftigen Feinabstimmungsfrequenz;
(A20), Konstruieren eines aktuellen Ersatzparametermodells auf der Grundlage der aktuellen Feinabstimmungsfrequenz, der aktuellen Ansteuerspannung und des aktuellen Ansteuerstroms;
Konstruieren eines historischen Ersatzparametermodells auf der Grundlage der historischen Feinabstimmungsfrequenz, der historischen Ansteuerspannung und des historischen Ansteuerstroms;
und Konstruieren eines zukünftigen Ersatzparametermodells auf der Grundlage der zukünftigen Feinabstimmungsfrequenz, der zukünftigen Ansteuerspannung und des zukünftigen Ansteuerstroms; und
(A30), Durchführen einer gemeinsamen Modellverarbeitung auf Grundlage des aktuellen Ersatzparametermodells, des historischen Ersatzparametermodells und des zukünftigen Ersatzparametermodells, um das Gleichungssystem mit vollem Rang für die Ersatzparameter zu erhalten.

3. Verfahren nach Anspruch 1, wobei das Bestimmen der aktualisierten Ersatzparameter des Induktionsmotors auf der Grundlage des Gleichungssystems mit vollem Rang für die Ersatzparameter Folgendes umfasst:
(B10), Durchführen einer Parameteridentifikation jeweils an dem Statorzweig, dem Rotorzweig und dem Erregungszweig gemäß dem Gleichungssystem mit vollem Rang für die Ersatzparameter, um Statorersatzparameter, Rotorersatzparameter und Erregungsersatzparameter des Induktionsmotors in einer stationären Betriebsphase zu erhalten; und
(B20), Festlegen der Statorersatzparameter, der Rotorersatzparameter und der Erregungsersatzparameter als die aktualisierten Ersatzparameter des Induktionsmotors.

4. Verfahren nach Anspruch 1, wobei das Anpassen der Ansteuerspannung gemäß den aktualisierten Ersatzparametern zur Aufrechterhaltung des stationären Betriebs des Induktionsmotors Folgendes umfasst:
(C10), Bestimmen einer optimalen tatsächlichen Frequenz des Induktionsmotors bei der stationären Betriebsdrehzahl gemäß den aktualisierten Ersatzparametern; und
(C20), nach dem Ansteuern des Induktionsmotors gemäß der optimalen tatsächlichen Frequenz, Anpassen der Ansteuerspannung des Induktionsmotors bei der optimalen tatsächlichen Frequenz gemäß einer Drehzahldifferenz zwischen der tatsächlichen Motordrehzahl und der stationären Betriebsdrehzahl und Aufrechterhalten des stationären Betriebs des Induktionsmotors gemäß einer angepassten Ansteuerspannung und der optimalen tatsächlichen Frequenz.

5. Verfahren nach Anspruch 4, wobei das Aufrechterhalten des stationären Betriebs des Induktionsmotors gemäß der angepassten Ansteuerspannung und der optimalen tatsächlichen Frequenz Folgendes umfasst:
(C201), Ansteuern des Induktionsmotors zum Betrieb gemäß der angepassten Ansteuerspannung und der optimalen tatsächlichen Frequenz, um eine aktuelle Motordrehzahl des Induktionsmotors zu erhalten;
(C202), Festlegen der aktuellen Motordrehzahl als eine nächste tatsächliche Motordrehzahl, Zurückkehren zu dem Schritt des Erkennens, ob die tatsächliche Motordrehzahl von der stationären Betriebsdrehzahl abweicht, und Zählen der ausgeführten Rücksprünge; und
(C203), Erhalten einer optimalen Ansteuerfrequenz und einer tatsächlichen Ansteuerspannung des Induktionsmotors bei der tatsächlichen Motordrehzahl, bis erkannt wird, dass die tatsächliche Motordrehzahl innerhalb einer durch einen vorgegebenen Schwellenwert begrenzten Anzahl von Rücksprüngen nicht von der stationären Betriebsdrehzahl abweicht, und Ansteuern des Induktionsmotors zur Aufrechterhaltung des stationären Betriebs gemäß der optimalen Ansteuerfrequenz und der tatsächlichen Ansteuerspannung.

6. Vorrichtung zur Steuerung eines Induktionsmotors, umfassend:
ein Anlaufmodul (H01), das dazu ausgebildet ist, anfängliche Ersatzparameter einer Ersatzschaltung des Induktionsmotors in Reaktion darauf zu erhalten, dass eine Motordrehzahl null ist, eine optimale Anlauffrequenz des Induktionsmotors gemäß den anfänglichen Ersatzparametern zu bestimmen, eine Anlaufspannung gemäß der optimalen Anlauffrequenz und einem vorgegebenen sicheren Anlaufstrom zu bestimmen und zu bewirken, dass der Induktionsmotor gemäß der optimalen Anlauffrequenz und der Anlaufspannung in eine Anlaufbetriebsphase eintritt;
wobei die optimale Anlauffrequenz eine Frequenz ist, bei der der Induktionsmotor ein maximales Drehmoment/Strom-Verhältnis erzielt, wenn die Motordrehzahl null ist;
**dadurch gekennzeichnet, dass** die Vorrichtung Folgendes umfasst:
ein Modul für den stationären Betrieb (H02), das dazu ausgebildet ist, eine Anlaufdrehzahl des Induktionsmotors während der Anlaufbetriebsphase zu erhalten, in Reaktion darauf, dass die Anlaufdrehzahl durch Beschleunigung eine vorgegebene stationäre Betriebsdrehzahl erreicht, dann festzustellen, dass der Induktionsmotor von der Anlaufbetriebsphase in eine stationäre Betriebsphase wechselt, Spannungs- und Stromwerte des Induktionsmotors in der stationären Betriebsphase zu erhalten, eine Parameteridentifikation an einem Statorzweig, einem Rotorzweig und einem Erregungszweig gemäß den Spannungs- und Stromwerten durchzuführen und eine optimale Betriebsfrequenz des Induktionsmotors gemäß den identifizierten Parametern zu bestimmen; und
ein Modul zur Aufrechterhaltung des stationären Betriebs (H03), das dazu ausgebildet ist, den Induktionsmotor zum Betrieb in der stationären Betriebsphase gemäß der optimalen Betriebsfrequenz anzusteuern, eine tatsächliche Motordrehzahl des Induktionsmotors in Reaktion darauf zu erhalten, dass der Induktionsmotor in der stationären Betriebsphase arbeitet, und die Ansteuerspannung gemäß der tatsächlichen Motordrehzahl anzupassen, um den stationären Betrieb des Induktionsmotors aufrechtzuerhalten;
wobei das Modul zur Aufrechterhaltung des stationären Betriebs (H03) zum Anpassen der Ansteuerspannung gemäß der tatsächlichen Motordrehzahl zur Aufrechterhaltung des stationären Betriebs des Induktionsmotors derart ausgebildet ist, dass
das Modul zur Aufrechterhaltung des stationären Betriebs (H03) in Reaktion darauf, dass sich der Induktionsmotor im stationären Betrieb befindet, aktualisierte Ersatzparameter des Induktionsmotors erhält und erkennt, ob die tatsächliche Motordrehzahl von der stationären Betriebsdrehzahl abweicht;
dass in Reaktion darauf, dass die tatsächliche Motordrehzahl von der stationären Betriebsdrehzahl abweicht, das Modul zur Aufrechterhaltung des stationären Betriebs (H03) die Ansteuerspannung gemäß den aktualisierten Ersatzparametern anpasst, um den stationären Betrieb des Induktionsmotors aufrechtzuerhalten; und
dass in Reaktion darauf, dass die tatsächliche Motordrehzahl nicht von der stationären Betriebsdrehzahl abweicht, das Modul zur Aufrechterhaltung des stationären Betriebs (H03) feststellt, dass der Induktionsmotor den stationären Betrieb aufrechterhält;
wobei das Modul zur Aufrechterhaltung des stationären Betriebs (H03) zum Erhalten der aktualisierten Ersatzparameter des Induktionsmotors in Reaktion darauf, dass sich der Induktionsmotor im stationären Betrieb befindet, derart ausgebildet ist, dass
das Modul zur Aufrechterhaltung des stationären Betriebs (H03) die Ansteuerfrequenz des Induktionsmotors während des stationären Betriebs zu einem aktuellen Feinabstimmungszeitpunkt fein abstimmt, um eine aktuelle Feinabstimmungsfrequenz zu erhalten;
eine historische Feinabstimmungsfrequenz, die durch Feinabstimmen der Ansteuerfrequenz des Induktionsmotors während des stationären Betriebs zu einem dem aktuellen Feinabstimmungszeitpunkt vorangehenden Feinabstimmungszeitpunkt erhalten wurde, erfasst;
und eine zukünftige Feinabstimmungsfrequenz, die durch Feinabstimmen der Ansteuerfrequenz des Induktionsmotors während des stationären Betriebs zu einem auf den aktuellen Feinabstimmungszeitpunkt folgenden Feinabstimmungszeitpunkt erhalten wird, erfasst;
dass das Modul zur Aufrechterhaltung des stationären Betriebs (H03) ein Gleichungssystem mit vollem Rang für die Ersatzparameter auf der Grundlage der aktuellen Feinabstimmungsfrequenz, der historischen Feinabstimmungsfrequenz und der zukünftigen Feinabstimmungsfrequenz konstruiert; und
dass das Modul zur Aufrechterhaltung des stationären Betriebs (H03) die aktualisierten Ersatzparameter des Induktionsmotors auf der Grundlage des Gleichungssystems mit vollem Rang für die Ersatzparameter bestimmt;
wobei die optimale Betriebsfrequenz eine Frequenz ist, bei der der Induktionsmotor ein maximales Drehmoment/Strom-Verhältnis erzielt, wenn die Drehzahl des Induktionsmotors der stationären Betriebsdrehzahl entspricht oder nahe bei der stationären Betriebsdrehzahl liegt.

7. Ausrüstung zur Steuerung eines Induktionsmotors, **dadurch gekennzeichnet, dass** sie einen Speicher (1005), einen Prozessor (1001) und ein Motorsteuerprogramm umfasst, das in dem Speicher (1005) gespeichert und auf dem Prozessor (1001) ausführbar ist, wobei der Prozessor (1001) beim Ausführen des Motorsteuerprogramms die Schritte des Verfahrens nach einem der Ansprüche 1 bis 5 ausführt.

8. Speichermedium, **dadurch gekennzeichnet, dass** das Speichermedium ein computerlesbares Speichermedium ist und das computerlesbare Speichermedium ein Motorsteuerprogramm speichert, das Anweisungen umfasst, die die Ausrüstung nach Anspruch 7 veranlassen, die Schritte des Verfahrens nach einem der Ansprüche 1 bis 5 auszuführen.

## Revendications

1. Procédé de commande de moteur à induction, appliqué à un mécanisme entraînant de moteur, dans lequel le mécanisme entraînant de moteur est connecté électriquement au moteur à induction, et un circuit équivalent du moteur à induction comprend une branche de stator, une branche de rotor et une branche d'excitation ;
dans lequel le procédé de commande de moteur à induction comprend :
(S10), obtenir des paramètres équivalents initiaux du circuit équivalent du moteur à induction en réponse à ce qu'une vitesse de moteur est nulle ; déterminer une fréquence de démarrage optimale du moteur à induction en fonction des paramètres équivalents initiaux ; déterminer une tension de démarrage en fonction de la fréquence de démarrage optimale et d'un courant de démarrage sûr prédéfini ; et permettre au moteur à induction de passer à une phase de fonctionnement de démarrage en fonction de la fréquence de démarrage optimale et de la tension de démarrage ;
dans lequel la fréquence de démarrage optimale est une fréquence à laquelle le moteur à induction produit un rapport couple/courant maximal lorsque la vitesse du moteur est nulle ;
le procédé étant **caractérisé par** :
(S20), obtenir une vitesse de démarrage de moteur du moteur à induction pendant la phase de fonctionnement de démarrage ; en réponse à ce que la vitesse de démarrage de moteur augmente jusqu'à une vitesse de fonctionnement stable prédéfinie, déterminer que le moteur à induction passe de la phase de fonctionnement de démarrage à une phase de fonctionnement stable, et obtenir des valeurs de tension et de courant du moteur à induction dans la phase de fonctionnement stable ; identifier des paramètres de la branche de stator, de la branche de rotor et de la branche d'excitation en fonction des valeurs de tension et de courant ; et déterminer une fréquence de fonctionnement optimale du moteur à induction en fonction des paramètres identifiés ; et
(S30), entraîner le moteur à induction à fonctionner dans la phase de fonctionnement stable en fonction de la fréquence de fonctionnement optimale ; obtenir une vitesse de moteur réelle du moteur à induction en réponse à ce que le moteur à induction fonctionne dans la phase de fonctionnement stable ; et régler une tension d'entraînement en fonction de la vitesse de moteur réelle pour maintenir un fonctionnement en régime permanent du moteur à induction ; dans lequel le réglage de la tension d'entraînement en fonction de la vitesse de moteur réelle pour maintenir le fonctionnement en régime permanent du moteur à induction comprend :
(S301), obtenir des paramètres équivalents mis à jour du moteur à induction en réponse à ce que le moteur à induction est en fonctionnement en régime permanent, et détecter si la vitesse de moteur réelle s'écarte de la vitesse de fonctionnement stable ;
(S302), en réponse à ce que la vitesse de moteur réelle s'écarte de la vitesse de fonctionnement stable, régler la tension d'entraînement en fonction des paramètres équivalents mis à jour pour maintenir le fonctionnement en régime permanent du moteur à induction ; et
(S303), en réponse ce que la vitesse de moteur réelle ne s'écarte pas de la vitesse de fonctionnement stable, déterminer que le moteur à induction maintient le fonctionnement en régime permanent ;
dans lequel l'obtention des paramètres équivalents mis à jour du moteur à induction en réponse à ce que le moteur à induction est en fonctionnement en régime permanent comprend :
(S3021), régler avec précision la fréquence d'entraînement du moteur à induction pendant le fonctionnement en régime permanent à un moment de réglage précis actuel pour obtenir une fréquence de réglage précis actuelle ; collecter une fréquence de réglage précis historique obtenue en réglant avec précision la fréquence d'entraînement du moteur à induction pendant le fonctionnement en régime permanent à un moment de réglage précis précédent du moment de réglage précis actuel ; et collecter une fréquence de réglage précis future obtenue en réglant avec précision la fréquence d'entraînement du moteur à induction pendant le fonctionnement en régime permanent à un moment de réglage précis suivant du moment de réglage précis actuel ;
(S3022), construire un groupe d'équations simultanées de paramètres équivalents à plein rang sur la base de la fréquence de réglage précis actuelle, de la fréquence de réglage précis historique et de la fréquence de réglage précis future ; et
(S3023), déterminer les paramètres équivalents mis à jour du moteur à induction sur la base du groupe d'équations simultanées de paramètres équivalents à plein rang ;
dans lequel la fréquence de fonctionnement optimale est une fréquence à laquelle le moteur à induction produit un rapport couple/courant maximal lorsque la vitesse du moteur à induction est la vitesse de fonctionnement stable ou proche de la vitesse de fonctionnement stable.

2. Procédé selon la revendication 1, dans lequel la construction du groupe d'équations simultanées de paramètres équivalents à plein rang sur la base de la fréquence de réglage précis actuelle, de la fréquence de réglage précis historique et de la fréquence de réglage précis future comprend :
(A10), obtenir respectivement une tension d'entraînement actuelle et un courant d'entraînement actuel du moteur à induction à la fréquence de réglage précis actuelle, une tension d'entraînement historique et un courant d'entraînement historique du moteur à induction à la fréquence de réglage précis historique, et une tension d'entraînement future et un courant d'entraînement futur du moteur à induction à la fréquence de réglage précis future ;
(A20), construire un modèle de paramètres équivalents actuel sur la base de la fréquence de réglage précis actuelle, de la tension d'entraînement actuelle et du courant d'entraînement actuel ; construire un modèle de paramètres équivalents historique sur la base de la fréquence de réglage précis historique, de la tension d'entraînement historique et du courant d'entraînement historique ; et construire un modèle de paramètres équivalents futur sur la base de la fréquence de réglage précis future, de la tension d'entraînement future et du courant d'entraînement futur ; et
(A30), effectuer un traitement simultané de modèles sur la base du modèle de paramètres équivalents actuel, du modèle de paramètres équivalents historique et du modèle de paramètres équivalents futur pour obtenir le groupe d'équations simultanées de paramètres équivalents à plein rang.

3. Procédé selon la revendication 1, dans lequel la détermination des paramètres équivalents mis à jour du moteur à induction sur la base du groupe d'équations simultanées de paramètres équivalents à plein rang comprend :
(B10), effectuer un traitement d'identification de paramètres sur la branche de stator, la branche de rotor et la branche d'excitation respectivement pour obtenir des paramètres équivalents de stator, des paramètres équivalents de rotor et des paramètres équivalents d'excitation du moteur à induction dans une phase de fonctionnement en régime permanent en fonction du groupe d'équations simultanées de paramètres équivalents à pleine rang ; et
(B20), configurer les paramètres équivalents de stator, les paramètres équivalents de rotor et les paramètres équivalents d'excitation comme paramètres équivalents mis à jour du moteur à induction.

4. Procédé selon la revendication 1, dans lequel le réglage de la tension d'entraînement en fonction des paramètres équivalents mis à jour pour maintenir le fonctionnement en régime permanent du moteur à induction comprend :
(C10), déterminer une fréquence réelle optimale du moteur à induction à la vitesse de fonctionnement stable en fonction des paramètres équivalents mis à jour ; et
(C20), après l'entraînement du moteur à induction en fonction de la fréquence réelle optimale, régler la tension d'entraînement du moteur à induction à la fréquence réelle optimale en fonction d'une différence de vitesses entre la vitesse de moteur réelle et la vitesse de fonctionnement stable, et maintenir le fonctionnement en régime permanent du moteur à induction en fonction d'une tension d'entraînement réglée et de la fréquence réelle optimale.

5. Procédé selon la revendication 4, dans lequel le maintien du fonctionnement en régime permanent du moteur à induction en fonction de la tension d'entraînement réglée et de la fréquence réelle optimale comprend :
(C201), entraîner le moteur à induction à fonctionner en fonction de la tension d'entraînement réglée et de la fréquence réelle optimale pour obtenir une vitesse de moteur actuelle du moteur à induction ;
(C202), configurer la vitesse de moteur actuelle comme vitesse de moteur réelle suivante, revenir pour effectuer la détection destinée à détecter si la vitesse de moteur réelle s'écarte de la vitesse de fonctionnement stable, et accumuler un nombre d'exécutions de retour ; et
(C203), obtenir une fréquence d'entraînement optimale et une tension d'entraînement réelle du moteur à induction à la vitesse de moteur réelle jusqu'à ce qu'il soit détecté que la vitesse de moteur réelle ne s'écarte pas de la vitesse de fonctionnement stable dans un seuil prédéfinie de nombre de retours, et entraîner le moteur à induction à fonctionner pour maintenir le fonctionnement en régime permanent en fonction de la fréquence d'entraînement optimale et de la tension d'entraînement réelle.

6. Dispositif de commande de moteur à induction, comprenant :
un module de démarrage (H01), configuré pour obtenir des paramètres équivalents initiaux d'un circuit équivalent du moteur à induction en réponse à ce qu'une vitesse de moteur est nulle ; déterminer une fréquence de démarrage optimale du moteur à induction en fonction des paramètres équivalents initiaux ; déterminer une tension de démarrage en fonction de la fréquence de démarrage optimale et d'un courant de démarrage sûr prédéfini ; et permettre au moteur à induction de passer à une phase de fonctionnement de démarrage en fonction de la fréquence de démarrage optimale et de la tension de démarrage ;
dans lequel la fréquence de démarrage optimale est une fréquence à laquelle le moteur à induction produit un rapport couple/courant maximal lorsque la vitesse du moteur est nulle ;
**caractérisé en ce que** le dispositif comprend :
un module de fonctionnement en régime permanent (H02), configuré obtenir une vitesse de démarrage de moteur du moteur à induction pendant la phase de fonctionnement de démarrage, en réponse à ce que la vitesse de démarrage de moteur augmente jusqu'à une vitesse de fonctionnement stable prédéfinie, puis déterminer que le moteur à induction passe de la phase de fonctionnement de démarrage à une phase de fonctionnement stable, obtenir des valeurs de tension et de courant du moteur à induction dans la phase de fonctionnement stable, effectuer une identification de paramètres sur la branche de stator, la branche de rotor et la branche d'excitation en fonction des valeurs de tension et de courant, et déterminer une fréquence de fonctionnement optimale du moteur à induction en fonction des paramètres identifiés ; et
un module de maintenance en régime permanent (H03), configuré pour entraîner le moteur à induction à fonctionner dans la phase de fonctionnement stable en fonction de la fréquence de fonctionnement optimale, obtenir une vitesse de moteur réelle du moteur à induction en réponse à ce que le moteur à induction fonctionne dans la phase de fonctionnement stable, et régler une tension d'entraînement en fonction de la vitesse de moteur réelle pour maintenir un fonctionnement en régime permanent du moteur à induction ;
dans lequel le module de maintenance en régime permanent (H03) étant configuré pour régler la tension d'entraînement en fonction de la vitesse de moteur réelle pour maintenir le fonctionnement en régime permanent du moteur à induction comprend :
le module de maintenance en régime permanent (H03) étant configuré pour obtenir des paramètres équivalents mis à jour du moteur à induction en réponse à ce que le moteur à induction est en fonctionnement en régime permanent, et détecter si la vitesse de moteur réelle s'écarte de la vitesse de fonctionnement stable ;
en réponse à ce que la vitesse de moteur réelle s'écarte de la vitesse de fonctionnement stable, le module de maintenance en régime permanent (H03) étant configuré pour régler la tension d'entraînement en fonction des paramètres équivalents mis à jour pour maintenir le fonctionnement en régime permanent du moteur à induction ; et
en réponse ce que la vitesse de moteur réelle ne s'écarte pas de la vitesse de fonctionnement stable, le module de maintenance en régime permanent (H03) étant configuré pour déterminer que le moteur à induction maintient le fonctionnement en régime permanent ;
dans lequel le module de maintenance en régime permanent (H03) étant configuré pour obtenir les paramètres équivalents mis à jour du moteur à induction en réponse à ce que le moteur à induction est en fonctionnement en régime permanent comprend :
le module de maintenance en régime permanent (H03) étant configuré pour régler avec précision la fréquence d'entraînement du moteur à induction pendant le fonctionnement en régime permanent à un moment de réglage précis actuel pour obtenir une fréquence de réglage précis actuelle ; collecter une fréquence de réglage précis historique obtenue en réglant avec précision la fréquence d'entraînement du moteur à induction pendant le fonctionnement en régime permanent à un moment de réglage précis précédent du moment de réglage précis actuel ; et collecter une fréquence de réglage précis future obtenue en réglant avec précision la fréquence d'entraînement du moteur à induction pendant le fonctionnement en régime permanent à un moment de réglage précis suivant du moment de réglage précis actuel ;
le module de maintenance en régime permanent (H03) étant configuré pour construire un groupe d'équations simultanées de paramètres équivalents à plein rang sur la base de la fréquence de réglage précis actuelle, de la fréquence de réglage précis historique et de la fréquence de réglage précis future ; et
le module de maintenance en régime permanent (H03) étant configuré pour déterminer les paramètres équivalents mis à jour du moteur à induction sur la base du groupe d'équations simultanées de paramètres équivalents à plein rang ;
dans lequel la fréquence de fonctionnement optimale est une fréquence à laquelle le moteur à induction produit un rapport couple/courant maximal lorsque la vitesse du moteur à induction est la vitesse de fonctionnement stable ou proche de la vitesse de fonctionnement stable.

7. Équipement de commande de moteur à induction, **caractérisé par** comprenant : une mémoire (1005), un processeur (1001) et un programme de commande de moteur stocké dans la mémoire (1005) et exécutable par le processeur (1001), dans lequel le processeur (1001) met en œuvre les étapes du procédé selon l'une quelconque des revendications 1 à 5 lors de l'exécution du programme de commande de moteur.

8. Support d'informations, **caractérisé en ce que** le support d'informations est un support d'informations lisible par ordinateur et le support d'informations lisible par ordinateur stocke un programme de commande de moteur comprenant des instructions destinées à amener l'équipement selon la revendication 7 à exécuter les étapes du procédé selon l'une quelconque des revendications 1 à 5.
